# EUROPEAN PATENT SPECIFICATION

(11) **EP 3 957 971 B1**
(45) Date of publication and mention of the grant of the patent: **27.12.2023**
(21) Application number: 20827519.8
(22) Date of filing: 08.06.2020
(51) Int. Cl.: G01N 1/22, A24C 5/34, G01N 27/62

(54) **METHOD FOR MEASURING ALUMINUM RELEASE AMOUNT IN SMOKE OF HEAT-NOT-BURN CIGARETTE**
VERFAHREN ZUR MESSUNG DER ALUMINIUMFREISETZUNGSMENGE IM RAUCH- EINER ZIGARETTE MIT ERWÄRMUNG OHNE VERBRENNUNG
PROCÉDÉ DE MESURE DE LA QUANTITÉ DE DÉGAGEMENT D'ALUMINIUM DANS LA FUMÉE D'UNE CIGARETTE SANS COMBUSTION

(30) Priority: 19.06.2019 CN 201910530732
(43) Date of publication of application: 23.02.2022
(73) Proprietor: China Tobacco Hubei Industrial Corporation Limited, Dongxihu District Wuhan Hubei 430040 (CN)
(72) Inventor: HUANG, Long, Wuhan, Hubei 430040 (CN); LUO, Chenghao, Wuhan, Hubei 430040 (CN); CHEN, Yikun, Wuhan, Hubei 430040 (CN); KE, Weichang, Wuhan, Hubei 430040 (CN); ZHANG, Duntie, Dongxihu District Hubei 430040 (CN)
(74) Representative: Fezzardi, Antonio
(86) International application number: PCT/CN2020/094851
(87) International publication number: WO 2020/253561

(56) References cited:
- CN-A- 103 969 324
- CN-A- 104 535 396
- CN-A- 106 568 764
- CN-A- 108 845 064
- CN-U- 207 516 105
- JP-A- 2001 349 828

## Description

### TECHNICAL FIELD

The present disclosure relates to a method for detecting a release amount of aluminum in a smoke of a heat-not-burn cigarette, and belongs to the technical field of tobacco detection.

### BACKGROUND

Low-temperature cigarettes, that is, heat-not-burn cigarettes, the tobacco substances are heated by an external heat source, and the atomization medium, flavor compositions and external fragrances in the tobacco substances are heated to produce smoke similar to the traditional cigarettes, see e.g. CN 103 969 324.

The smoke that is inhaled gives consumers a sense of physical satisfaction. Because the tobacco substances in low-temperature cigarettes are only heated but not burned, and the heating temperature (250°C~350°C) is much lower than the burning temperature of traditional cigarettes (800°C~900°C), the harmful compositions and biological toxicity are greatly reduced, and the sidestream smoke and environmental smoke are also greatly reduced. The composition of mainstream smoke is significantly different from that of traditional cigarettes.

Not only in order to prevent the leakage of the atomizing agent glycerin and propylene glycol to the surface of the cigarette paper from affecting the appearance of the heat-not-burn cigarettes, but in order to better gather heat and keep the moisture of the tobacco raw materials from major changes, in the production process of heat-not-burn cigarettes, many companies use aluminum foil as cigarette paper to make cigarettes, such as HEET cigarettes of Philips Morris Company, COO cigarettes of China Tobacco Hubei Industrial Corporation Limited, and the like. Aluminum and compounds thereof are often used as food additives, but excessive use can also cause certain harm to human health. The World Health Organization recommends that the daily intake of Al (aluminum) per person should be controlled below 0.004g (ie 4mg (milligram)). JECFA (Joint FAO/ Joint Expert Committee on Food Additives) has formulated the "Tentative Weekly Tolerable Intake" for aluminum. The oral intake of aluminum per kilogram of body weight per person (the whole population) shall not exceed 2mg per week (calculated based on 50kg of body weight, every person intakes about 15mg per day), such that it will not cause health hazards.

Heat-not-burn cigarettes are a new thing. There is no detection method for the smoke compositions of heat-not-burn cigarettes in the prior art, and there is no verified and approved special-purpose smoking machine for heat-not-burn cigarettes, and there is no method for detecting a released amount of the smoke in the heat-not-burn cigarettes.

### SUMMARY

The present disclosure is intended to provide a method for detecting a release amount of aluminum in a smoke of the heat-not-burn cigarette, enabling to detect the amount of aluminum released in the smoke aerosol of the heat-not-burn cigarette, with good stability and linearity, good relevance, good practicability, high sensitivity and good repeatability.

In order to achieve the above-mentioned object, the present disclosure adopts the following technical solution: a method for detecting a release amount of aluminum in a smoke of a heat-not-burn cigarette, comprising the following steps: preparing standard working solution of aluminum; obtaining a standard working curve of aluminum according to the standard working solution of aluminum; puffing a heat-not-burn cigarette, and collecting total smoke compositions of the heat-not-burn cigarette; obtaining a sample preparation solution according to the collected total smoke compositions; determining the release amount of aluminum in the total smoke compositions by combining with the standard working curve of aluminum, according to a measurement and analysis of the sample preparation solution.

In a specific embodiment, the standard working solution of aluminum is obtained by gradually diluting aluminum single-element standard solution, and the standard working solution of aluminum comprises standard working solution of aluminum single-element series.

In a specific embodiment, according to the standard working solution of aluminum, an external standard method or an internal standard method is adopted to obtain the standard working curve of aluminum.

In a specific embodiment, according to the standard working solution of aluminum, the standard working curve of aluminum is obtained by combining with an internal standard working solution.

In a specific embodiment, the internal standard working solution is obtained by diluting ⁴⁵Sc element standard solution.

In a specific embodiment, both of the aluminum single-element standard solution and the ⁴⁵Sc element standard solution have medium of first nitric acid solution.

In a specific embodiment, the total smoke compositions are collected in a solution capture method.

In a specific embodiment, the total smoke compositions are collected by adopting a plurality of absorption bottles sequentially connected in series.

In a specific embodiment, collecting the total smoke compositions comprises the following steps: (1) determining a cigarette smoking machine; (2) connecting the plurality of said absorption bottles connected in series between a rear end of a holder of the cigarette smoking machine and a puffing mechanism; (3) inserting a cigarette end of the heat-not-burn cigarette into a heater, and inserting a mouthpiece end into the holder of the cigarette smoking machine; (4) heating by adopting the heater, and collecting the total smoke compositions in a duration from a time the cigarette smoking machine starts puffing to a time the cigarette smoking machine ends puffing.

In a specific embodiment, a number of puffing is determined according to a puffing mode of the cigarette smoking machine and a heating time set by the heater, and after reaching the number of puffing, the cigarette smoking machine ends puffing.

In a specific embodiment, the puffing mode of the cigarette smoking machine is a Canadian deep puffing mode or a standard puffing mode.

In a specific embodiment, the cigarette smoking machine adopting the Canadian deep puffing mode comprises a puffing capacity of 55 ml per puff, a puffing time of 2 seconds, and an interval between adjacent puffs of 28 seconds; the Canadian deep puffing mode takes 2 puffs per minute.

In a specific embodiment, the cigarette smoking machine adopting the standard puffing mode comprises a puffing capacity of 35 ml per puff, a puffing time of 2 seconds, and an interval between adjacent puffs of 58 seconds; the standard puffing mode takes 1 puff per minute.

In a specific embodiment, the cigarette smoking machine is a linear smoking machine.

In a specific embodiment, adding an oxidant to the absorption bottle, transferring a absorption liquid in the absorption bottle completely to a volumetric flask, and obtaining the sample preparation solution after constant volume is made.

In a specific embodiment, the absorption bottle is a quartz absorption bottle, and the absorption liquid in the quartz absorption bottle is a second nitric acid solution.

In a specific embodiment, the oxidant is added to the quartz absorption bottle to completely oxidize the aluminum in the total smoke compositions; and after shaking, the absorption liquid and detergent in the quartz absorption bottle are completely transferred into the volumetric flask together, and the first nitric acid solution is used to make the volume up to a mark, and the solution is shaken to obtain the sample preparation solution.

In a specific embodiment, the first nitric acid solution has is a volume fraction of 2% to 8%; the second nitric acid solution has a volume of 15 to 25 milliliters, and the second nitric acid solution has a volume fraction of 5% to 15%.

In a specific embodiment, the sample preparation solution is measured using an inductively coupled plasma mass spectrometer.

In a specific embodiment, the standard working solution of aluminum single-element series comprises the standard working solution of aluminum single-element series with a concentration of 0, 0.5, 1.0, 2.0, 5.0, 10.0, 20.0 and 50.0 micrograms per liter .

In a specific embodiment, a concentration of the internal standard working solution is determined according to a concentration gradient of the standard working solution of aluminum single-element series and a content range of an actual test sample.

In a specific embodiment, the concentration of the internal standard working solution is 10 micrograms per liter.

Due to the above technical solutions, the present disclosure has the following advantages:
1. The present disclosure establishes a method for detecting the release amount of aluminum in the mainstream smoke of heat-not-burn cigarettes, with good precision and high accuracy, and a high aluminum element recovery rate, it is suitable for quantitative analysis of aluminum emission in mainstream smoke of heat-not-burn cigarettes.
2. The method of the present disclosure can make full use of the linear smoking machine for puffing the heat-not-burn cigarettes and for collecting total smoke compositions, without the need for a special heat-not-burn cigarette smoking machine, it is simple and efficient.
3. According to the characteristics of heat-not-burn cigarettes, the present disclosure adopts a series of multi-stage absorption bottles, such that the capture of total smoke compositions and the determination of the release amount of aluminum can be realized.
4. The operations of puffing, full smoke capturing and absorption liquid treatment of the heat-not-burn cigarette of the present disclosure are simple and convenient, and the sample preparation solution is measured by inductively coupled plasma mass spectrometer, such that it is convenient, stable, and has good linear correlation, and practicality are good.
5. The method of the present disclosure has high sensitivity and good repeatability.

Other features and advantages of the present disclosure will be described in the following description, and part thereof becomes obvious from the description, or understood by implementing the present disclosure. The objectives and other advantages of the present disclosure can be realized and obtained through the structures specifically pointed out in the specification, claims and drawings.

### BRIEF DESCRIPTION OF DRAWINGS

In order to more clearly describe the technical solutions in the embodiments of the present disclosure, the following will briefly introduce the drawings required in the description of the embodiments:
FIG. 1 is a schematic flow diagram illustrating a specific embodiment of the method for detecting the release amount of aluminum in the smoke of the heat-not-burn cigarette according to the present disclosure;
FIG. 2 is a schematic diagram illustrating a linear smoking machine holder, a puffing unit, and series-connected absorption bottles in a specific embodiment of the present disclosure;
FIG. 3 is a schematic structural diagram illustrating a quartz absorption bottle in a specific embodiment of the present disclosure.

### DESCRIPTION OF EMBODIMENTS

The implementation of the present disclosure will be described in detail below with reference to the accompanying drawings and embodiments, so as to fully understand how the present disclosure applies technical means to solve technical problems and achieve the realization process of technical effects and implement them accordingly. It should be noted that, as long as there is no conflict, each embodiment of the present disclosure and each feature in each embodiment can be combined with one another, and the technical solutions formed are all within the protection scope of the present disclosure.

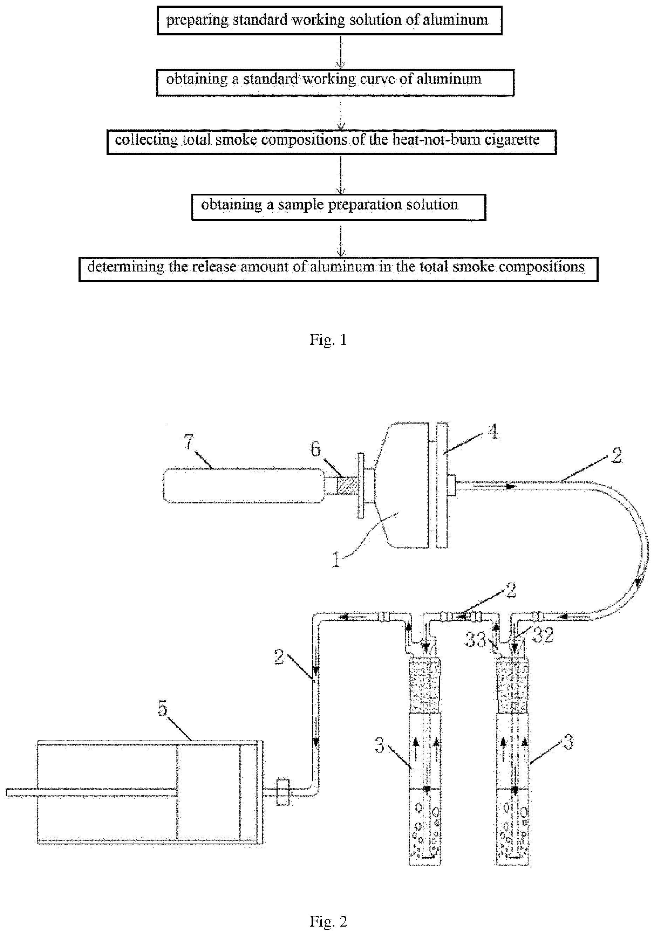

As shown in FIG. 1, the method for detecting the amount of aluminum released in the smoke in the heat-not-burn cigarette provided by the present disclosure may include the following steps:
(1) preparing standard working solution of aluminum.

The aluminum single-element standard solution may be determined to be the standard stock solution; the aluminum single-element standard solution may be gradually diluted to obtain the standard working solution of aluminum single-element series. According to actual needs, the standard working solution of aluminum is ready to use.

Further, the preparation of the standard working solution of aluminum may include the following: determining the medium of the standard solution of aluminum single-element to be the first nitric acid solution with the standard value of 10 mg/L (milligrams/liter). Among them, the concentration gradient of the standard working solution of aluminum single-element series can be determined according to the content range of the actual test sample. Preferably, the concentration of the standard working solution of aluminum single-element series may be 0, 0.5, 1.0, 2.0, 5.0, 10.0, 20.0, and 50.0 µg/L (micrograms/liter), respectively.

In a specific embodiment, the volume fraction of the first nitric acid solution may be 2% to 8%. Preferably, the volume fraction of the first nitric acid solution may be 5%.

### (2) obtaining a standard working curve of aluminum according to the standard working solution of aluminum, and determining the detection limit and quantification limit of aluminum.

According to the standard working solution of aluminum, the external standard method or the internal standard method may be used to obtain the standard working curve of aluminum. The external standard method is opposite to the internal standard method, it refers to a quantitative method that a certain amount of standard substance (reference substance) is added to the blank sample to make a control sample, and the sample is processed and tested in parallel with the unknown sample; the concentration of the tested compositions in the unknown sample is inferred based on the functional relationship between the response value of the control sample and the concentration of the added standard substance (reference substance). For example, in chromatography, we want to know the concentration of the test sample. We can use the external standard method to first draw a working curve with the standard sample of the compositions to be tested, and then to measure the concentration of the sample corresponding to the peak height or peak area of each peak, and draw the standard curve. In practical applications, the sample concentration can be obtained by measuring the peak height or peak area corresponding to the standard curve. Preferably, according to the standard working solution of aluminum, combined with the internal standard working solution, the standard working curve of aluminum may be obtained. Specifically, the internal standard working solution may be added online, and the multi-level standard working solution of aluminum single-element series may be drawn into the ICP-MS (inductively coupled plasma mass spectrometer) for determination. The ratio of the aluminum element content to the internal standard element content may be taken as the abscissa, the ratio of the mass-to-charge intensity of aluminum element to the internal standard element mass-to-charge intensity may be taken as the ordinate, and the aluminum element work curve is established. Then, linear regression may be performed on the calibration data to obtain the standard working curve and correlation coefficient. Preferably, the standard working solution of aluminum single-element with a concentration of 0.5 µg/L may be injected multiple times, the standard deviation of the measurement result may be calculated, and the detection limit and quantification limit of aluminum may be determined by 3 times and 10 times the standard deviation, respectively.

The results show that the working curve of aluminum has good linearity, and the correlation coefficient is higher than 0.999. The quantification limit of aluminum is much lower than the content of the target in the sample preparation solution, such that it is suitable for quantitative analysis. Preferably, ⁴⁵Sc element standard solution may be used to dilute to obtain an internal standard working solution.

Further, the preparation of the internal standard working solution may include the following: determining the medium of the ⁴⁵Sc element standard solution to be the first nitric acid solution with the standard value of 10 mg/L (milligrams per liter). Among them, the concentration of the internal standard working solution can be determined according to the concentration gradient of the standard working solution of aluminum single-element series and the content range of the actual test sample. Preferably, the concentration of the internal standard working solution may be 10.0 µg/L (micrograms per liter).

In a preferred embodiment, the measurement conditions of the inductively coupled plasma mass spectrometer may be determined (as shown in Table 1). Among them, the RF power of the inductively coupled plasma mass spectrometer is 1280w (watts), the carrier gas flow rate is 1.11L/min (liters/minute), the sampling rate is 0.1mL/min (milliliters/minute), and the acquisition mode is full quantitative analysis, the number of repetitions is 3 times.

In a specific embodiment, the detection limit of aluminum is determined to be 0.39 ng/L.

In a specific embodiment, the quantitative limit of aluminum is determined to be 1.31 ng/L.

**Table 1: Inductively Coupled Plasma Mass Spectrometer measurement conditions**

| Parameter | Operating conditions |
|---|---|
| Radio frequency power | 1280w |
| Carrier gas flow rate | 1.11 L/min |
| Sampling rate | 0.1 mL/min |
| Acquisition mode | Full quantitative analysis |
| Number of repetitions | 3 |

In a specific embodiment, the mass number of the aluminum element is determined to be 27. The internal standard element is determined to be ⁴⁵Sc. The integration time is determined to be 0.5 seconds (as shown in Table 2).

**Table 2: Element determined mass number, internal standard element, integration time**

| Element | Determined mass number | Internal standard element | Integration time/s |
|---|---|---|---|
| Al | 27 | ⁴⁵Sc | 0.5 |

### (3) puffing heat-not-burn cigarettes, and collecting total smoke compositions of heat-not-burn cigarettes.

Puffing heat-not-burn cigarettes and collecting total smoke compositions may include the following steps:
□ determining the cigarette smoking machine 1 (as shown in FIG. 2);
□ connecting a plurality of absorption bottles 3 connected in series between the rear end of the holder 4 of the cigarette smoking machine 1 and the puffing unit 5 through the connecting pipe 2. After all the connecting pipes 2 are connected, the gas tightness check may be performed;
□ inserting the cigarette end of the heat-not-burn cigarette 6 into the heater 7, and inserting the mouthpiece end into the holder 4 of the cigarette smoking machine 1;
□ turning on the switch of the heater 7 to preheat, and after the preheating time may be reached, the cigarette smoking machine 1 starts to puff until the puffing is completed, and collecting the total smoke compositions.

Further, the number of puffs may be determined according to the puffing mode of the cigarette smoking machine 1 and the heating time set by the heater 7. After the number of puffs is reached, the cigarette smoking machine 1 ends puffing.

In a specific embodiment, the puffing mode of the cigarette smoking machine 1 may be a Canadian deep puffing mode or an ISO standard puffing mode.

In a specific embodiment, the cigarette smoking machine 1 adopting the Canadian deep puffing mode may include a puffing capacity of 55 milliliters per puff, a puffing time of 2 seconds, and an interval between adjacent puffs of 28 seconds. The Canadian deep puffing mode is determined to take 2 puffs per minute.

In a specific embodiment, the cigarette smoking machine 1 adopting the ISO standard puffing mode may include a puffing capacity of 35 milliliters per puff, a puffing time of 2 seconds, and an interval between adjacent puffs of 58 seconds. The ISO standard puffing mode is determined to take 1 puff per minute.

In a specific embodiment, the heater 7 may be set for a continuous heating time of 3-6 minutes, the Canadian deep puffing mode may be used to take 6-12 puffs, and the ISO standard puffing mode may be used to take 3-6 puffs. After reaching the number of puffs, the puffing may be ended.

In a specific embodiment, the cigarette smoking machine 1 may be a linear smoking machine (as shown in FIG. 2).

In a specific embodiment, the puffing mode of the cigarette smoking machine may be independently designed according to actual needs.

In a specific embodiment, the absorption bottle 3 contains a second nitric acid solution as an absorption liquid for absorbing smoke.

In a specific embodiment, the volume of the second nitric acid solution is 15-25 ml, and the volume fraction of the second nitric acid solution is 5%-15%. Preferably, the volume of the second nitric acid solution is 20 milliliters, and the volume fraction of the second nitric acid solution is 10%.

In a preferred embodiment, the absorption bottle 3 is a quartz absorption bottle (a porous glass plate absorption bottle), and the absorption liquid of the quartz absorption bottle 3 is a second nitric acid solution.

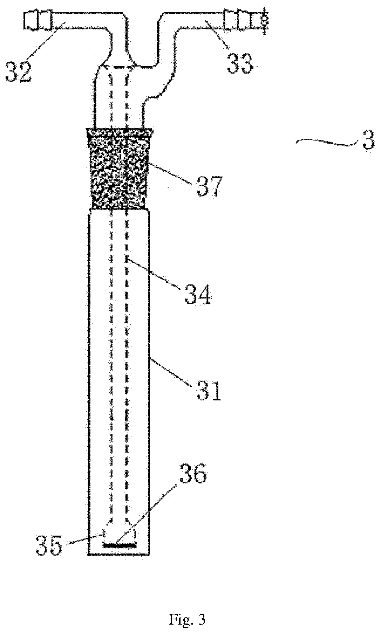

In a specific embodiment, as shown in FIG. 3, the quartz absorption bottle 3 may include a bottle body 31, and an air inlet 32 provided on the first side of the bottle body 31. The collected total smoke compositions may enter at the air inlet 32. An air outlet 33 may be provided on the second side of the bottle body 31, and the smoke absorbed by the second nitric acid solution escapes from the air outlet 33. The inside of the bottle body 31 may be provided with a straight glass tube 34, the top of the straight glass tube 34 may be connected to the air inlet 32, and the bottom of the straight glass tube 34 may be provided with a semi-glass sphere 35, the semi-glass sphere 35 can increase the contact area of the total smoke compositions and the absorption liquid, to reduce the speed of smoke escape. A sand core filter plate 36 may be provided at the bottom of the semi-glass sphere 35. The sand core filter plate 36 can increase the resistance of the smoke to escape, and at the same time, the smoke may be dispersed into a plurality of small bubbles to escape after passing through the sand core filter plate 36. In this way, the smoke can more fully contact the quartz absorption bottle 3, so that the absorption may be faster and safer. A frosted standard port 37 may be provided on the side wall of the bottle body 31 to improve the sealing performance.

In a specific embodiment, the sand core filter plate 36 may be configured as a quartz sand core filter plate.

In a specific embodiment, the diameter of the quartz sand core filter plate 36 may be 100-160 microns.

In a specific embodiment, five quartz absorption bottles 3 respectively added with a second nitric acid solution are connected in series, and the content of aluminum in each quartz absorption bottle 3 is measured. It is determined that aluminum is detected in the first and second quartz absorption bottles 3, and aluminum is not detected in the third, fourth, and fifth quartz absorption bottles 3.

In a preferred embodiment, the number of quartz absorption bottles 3 may be two, which can achieve effective capturing of aluminum in mainstream smoke.

In a preferred embodiment, as shown in FIGS. 2 and 3, two quartz absorption bottles 3 may be connected by a connecting pipe 2. Among them, the air inlet 32 of the first quartz absorption bottle 3 may be connected to the outlet end (the rear end of the holder 4, as shown in FIG. 2) of the total smoke compositions through the connecting pipe 2, and the air outlet 33 of the first quartz absorption bottle 3 may be connected to the air inlet 32 of the second quartz absorption bottle 3 through the connecting pipe 2, and the air outlet 33 of the second quartz absorption bottle 3 may be connected to the puffing unit 5, such that the total smoke can be fully absorbed by the absorption liquid.

### (4) obtaining sample preparation solution based on the collected total smoke compositions.

An oxidant may be added to the absorption bottle 3 to fully oxidize the aluminum element in the total smoke compositions, and the absorption liquid in the absorption bottle 3 may be completely transferred into the volumetric flask, and after constant volume is made, the sample preparation solution may be obtained. Specifically, an oxidant may be added to the quartz absorption bottle 3 to fully oxidize the aluminum element in the total smoke compositions. After ultrasonic vibration, the absorption liquid and washing liquid in the quartz absorption flask 3 may be completely transferred into the volumetric flask together, and the first nitric acid solution may be adopted to dilute to the mark, and shaken up, such that a sample preparation solution can be obtained.

In a specific embodiment, the oxidant is hydrogen peroxide.

In a specific embodiment, the volume of hydrogen peroxide is 5-10 mL (milliliter). Preferably, the volume of hydrogen peroxide is 5 ml.

In a specific embodiment, the time of ultrasonic vibration is 20-50 minutes. Preferably, the time of ultrasonic vibration is 30 minutes.

In a specific embodiment, the volumetric flask is a plastic volumetric flask. Preferably, the volume of the plastic volumetric flask is 100 milliliters. (5) determining the amount of aluminum released in the total smoke compositions by combining with the standard working curve of aluminum, according to the measurement and analysis of the sample preparation solution;

The sample preparation solution is measured using an inductively coupled plasma mass spectrometer. Specifically, the measurement conditions of the inductively coupled plasma mass spectrometer is determined (as shown in Table 1). The mass number of aluminum is determined as 27. The internal standard element is determined to be ⁴⁵Sc. The integration time is determined to be 0.5 seconds (as shown in Table 2).

Substituting the ratio of the mass-to-charge intensity of the aluminum element to the mass-to-charge intensity of the internal standard element into the standard working curve of aluminum, the content of aluminum in the smoke aerosol in the sample preparation solution can be obtained.

Three specific embodiments are listed below.

### Embodiment One

### (1) preparing standard working solution of aluminum.

It is determined that the aluminum single-element standard solution is a standard stock solution, the medium of the aluminum single-element standard solution is 5% (volume fraction) nitric acid solution, and its standard value is 10 mg/L. Then, 1.0 ml of the aluminum single-element standard solution is accurately pipetted into a 100 ml plastic volumetric flask, and a 5% (volume fraction) nitric acid solution is adopted to make a constant volume to obtain a working solution with a concentration of 100 µg/L. Then, 8 pieces of 50 ml plastic volumetric flasks are selected, a certain volume of aluminum single-element standard solution is respectively accurately pipetted, and 5% (volume fraction) nitric acid solution is adopted to make a constant volume, and gradually diluted to obtain 0, 0.5, 1.0, 2.0, 5.0, 10.0, 20.0 and 50.0 micrograms/liter of standard working solution of aluminum single-element series.

### (2) obtaining a standard working curve of aluminum by combining with the internal standard working solution, according to the standard working solution of aluminum.

It is determined that the medium of the ⁴⁵Sc element standard solution is 5% (volume fraction) nitric acid solution, and its standard value is 10 mg/L. 0.1 ml of the ⁴⁵Sc element standard solution is accurately pipetted into a 100 ml plastic volumetric flask to obtain an internal standard working solution with a concentration of 10.0 µg/L. Then, the internal standard working solution is added online, and the above-mentioned 8-level standard working solution of aluminum single-element series (standard working solution of aluminum single-element series with concentrations of 0, 0.5, 1.0, 2.0, 5.0, 10.0, 20.0 and 50.0 micrograms/liter) is drawn and injected into an inductively coupled plasma mass spectrometer for measurement. Among them, the parameters of the inductively coupled plasma mass spectrometer are shown in Table 1, the mass number of aluminum element, the corresponding internal standard elements, and the integration time are shown in Table 2. Then, the ratio of the aluminum element content to the internal standard element content is taken as the abscissa, and the ratio of the mass-to-charge ratio of aluminum element to the internal standard element's mass-to-charge ratio is taken as the ordinate to establish an aluminum working curve. Linear regression is performed on the calibration data to obtain the standard working curve and correlation coefficient. The 0.5 µg/L aluminum single-element standard working solution is injected 8 times, and the standard deviation of the measurement result is calculated, and the standard deviation is determined by 3 times and 10 times, respectively. The detection limit and quantification limit of aluminum are determined by 3 times and 10 times the standard deviation, respectively, the calculated result is determined (as shown in Table 3). The results show that the working curve of aluminum has good linearity, and the correlation coefficient is higher than 0.999; the quantification limit of aluminum is lower than the content of the target substance in the sample preparation solution, such that it is suitable for quantitative analysis.

**Table 3: Standard working curve and detection limit of aluminum**

| Linear concentration range | Regression equation | Related parameters | Detection limit | Quantification limit |
|---|---|---|---|---|
| 5.0~500.0 ng/piece | Y=0.7251x+0.01378 | 0.9995 | 0.39 ng/ piece | 1.31 ng/piece |

### (3) puffing heat-not-burn cigarettes, and collecting total smoke compositions of heat-not-burn cigarettes.

After determining the traditional cigarette linear smoking machine 1 (as shown in FIG. 2), two quartz absorption bottles 3 with 20 ml of 10% (volume fraction) nitric acid solution are connected through the connecting pipe 2, and the two quartz absorption bottle 3 are connected between the rear end of the holder 4 and the puffing unit 5. After all the connecting pipes 2 are connected, the air tightness is checked. Then, the cigarette end of the heating non-burning cigarette sample A is inserted into the heater 7, the mouthpiece end is inserted into the holder 4. The heater 7 is turned on to preheat for 30 seconds. After the preheating time is reached, the linear smoking machine 1 starts to puff and collect total smoke compositions. Among them, the linear smoking machine 1 adopts the Canadian deep puffing mode, the heating time of the heater is set to 4 minutes, and the puffing is completed after 8 puffs are taken.

### (4) obtaining sample preparation solution according to the collected total smoke compositions.

5 milliliters of hydrogen peroxide is added into the two quartz absorption flasks 3 connected in series, and shaken ultrasonically for 30 minutes. The absorption liquid and washing liquid in the two quartz absorption flasks 3 are transferred into a 100 milliliter plastic volumetric flask, and 5% (volume fraction) nitric acid solution is adopted to make the volume up to the mark, shaken well to obtain a sample preparation solution.

### (5) determining the amount of aluminum released in the total smoke compositions by combining with the standard working curve of aluminum, according to measurement and analysis of the sample preparation solution.

The sample preparation solution is measured by inductively coupled plasma mass spectrometer, and the instrument conditions and parameters, the detection method are consistent with step (2). Then, the ratio of the mass-to-charge intensity of aluminum element to the mass-to-charge ratio intensity of the internal standard element is substituted into the standard working curve to obtain the aluminum element content in the smoke aerosol of the heat-not-burn cigarette sample A (as shown in Table 4).

**Table 4: Analysis results of heat-not-burn cigarette samples of the three embodiments (ng/piece)**

| No. | Puffing mode | Number of puffs | Al (ng/piece) |
|---|---|---|---|
| A | Canadian deep puffing | 8 | 131.32 |
| B | Canadian deep puffing | 8 | 93.61 |
| C | ISO standard puffing | 4 | 6.14 |

### (6) Precision and recovery experiment.

The sample preparation solution is divided into four parts, of which 1 part is a reference, and the other 3 parts are added with three different concentration levels of aluminum single-element standard working solutions. Two sample preparation solutions are repeated for each addition level. The sample preparation solution is measured, and the recovery rate is calculated from the original content, the adding standard amount, and the adding standard measured amount in the sample preparation solution (as shown in Table 5). The results show that the standard recovery rate of aluminum is between 98.8% and 102.4%. The extraction solution sample added with the medium concentration aluminum single-element adding standard working solution is repeatedly analyzed for 6 times, and the calculation result of the relative standard deviation (RSD) of the aluminum element is determined to be 1.17%.

**Table 5: Adding Standard Recovery Rate of Analytical Method**

| Sample value (ng/piece) | Addition amount (ng/piece) | Detection value (ng/piece) | Recovery rate (%) |
|---|---|---|---|
| 131.32 | 5.0 | 134.8 | 98.8 |
| | 100.0 | 233.6 | 101.7 |
| | 200.0 | 334.5 | 102.4 |

### Embodiment Two

On the basis of the above-mentioned embodiment, the present embodiment tests the heat-not-burn cigarette sample B. All steps are the same as those in the first embodiment, and the amount of aluminum element released in the mainstream smoke of the heat-not-burn cigarette sample B is determined (as shown in Table 4).

### Embodiment Three

On the basis of the above-mentioned embodiment, the present embodiment tests the heat-not-burn cigarette sample C, where the linear smoking machine 1 adopts the ISO standard puffing mode. The heating time is set to 4 minutes. After 4 puffs are taken, the puffing is completed. The other steps are the same as those in the first embodiment, and the amount of aluminum released in the mainstream smoke of the heat-not-burn cigarette sample C is determined (as shown in Table 4).

The method of the present disclosure uses a traditional linear cigarette smoking machine for the puffing of heat-not-burn cigarettes and the collection of total smoke compositions, without the need for a special heat-not-burn cigarette smoking machine. Multi-stage absorption bottles are connected in series to achieve total smoke compositions captured and the amount of aluminum released measured. Sample puffs of the heat-not-burn cigarette, capture of the total smoke and treatment of the absorption liquid are easy to operate. It is convenient to determine by adopting the inductively coupled plasma mass spectrometer, with good stability, good linear correlation, good practicability, high sensitivity, and good repeatability.

Although the disclosed embodiments of the present disclosure are as described above, the content described is only the embodiments used to facilitate the understanding of the present disclosure, and is not intended to limit the present disclosure. The patent protection scope of the present disclosure is subject to the scope defined by the appended claims.

## Claims

1. A method for detecting a release amount of aluminum in a smoke of a heat-not-burn cigarette (6) comprising the following steps:
preparing standard working solution of aluminum;
obtaining a standard working curve of aluminum according to the standard working solution of aluminum;
puffing a heat-not-burn cigarette, and collecting total smoke compositions of the heat-not-burn cigarette;
obtaining a sample preparation solution according to the collected total smoke compositions;
determining the release amount of aluminum in the total smoke compositions by combining with the standard working curve of aluminum, according to a measurement and analysis of the sample preparation solution.

2. The method according to claim 1, wherein the standard working solution of aluminum is obtained by gradually diluting aluminum single-element standard solution, and the standard working solution of aluminum comprises standard working solution of aluminum single-element series.

3. The method according to claim 1 or 2, wherein, according to the standard working solution of aluminum, an external standard method or an internal standard method is adopted to obtain the standard working curve of aluminum.

4. The method according to claim 3, wherein, according to the standard working solution of aluminum, the standard working curve of aluminum is obtained by combining with an internal standard working solution.

5. The method according to claim 4, wherein the internal standard working solution is obtained by diluting ⁴⁵Sc element standard solution.

6. The method according to claim 5, wherein both of the aluminum single-element standard solution and the ⁴⁵Sc element standard solution have medium of first nitric acid solution.

7. The method according to claim 1, wherein the total smoke compositions are collected in a solution capture method.

8. The method according to claim 7, wherein the total smoke compositions are collected by adopting a plurality of absorption bottles sequentially connected in series.

9. The method according to claim 8, wherein collecting the total smoke compositions comprises the following steps:
(1) determining a cigarette smoking machine;
(2) connecting the plurality of said absorption bottles connected in series between a rear end of a holder of the cigarette smoking machine and a puffing mechanism;
(3) inserting a cigarette end of the heat-not-burn cigarette into a heater, and inserting a mouthpiece end into the holder of the cigarette smoking machine;
(4) heating by adopting the heater, and collecting the total smoke compositions in a duration from a time the cigarette smoking machine starts puffing to a time the cigarette smoking machine ends puffing.

10. The method according to claim 9, wherein a number of puffing is determined according to a puffing mode of the cigarette smoking machine and a heating time set by the heater, and after reaching the number of puffing, the cigarette smoking machine ends puffing.

11. The method according to claim 10, wherein the puffing mode of the cigarette smoking machine is a Canadian deep puffing mode or a standard puffing mode.

12. The method according to claim 11, wherein the cigarette smoking machine adopting the Canadian deep puffing mode comprises a puffing capacity of 55 ml, a puffing time of 2 seconds, and an interval between adjacent puffs of 28 seconds; the Canadian deep puffing mode takes 2 puffs per minute.

13. The method according to claim 11, wherein the cigarette smoking machine adopting the standard puffing mode comprises a puffing capacity of 35 ml per puff, a puffing time of 2 seconds, and an interval between adjacent puffs of 58 seconds; the standard puffing mode takes 1 puff per minute.

14. The method according to claim 9, wherein the cigarette smoking machine is a linear smoking machine.

15. The method according to claim 9, wherein adding an oxidant to the absorption bottle, transferring a absorption liquid in the absorption bottle completely to a volumetric flask, and obtaining the sample preparation solution after constant volume is made.

16. The method according to claim 15, wherein the absorption bottle is a quartz absorption bottle, and the absorption liquid in the quartz absorption bottle is a second nitric acid solution.

17. The method according to claim 16, wherein the oxidant is added to the quartz absorption bottle to completely oxidize the aluminum in the total smoke compositions; and after shaking, the absorption liquid and detergent in the quartz absorption bottle are completely transferred into the volumetric flask together, and the first nitric acid solution is used to make the volume up to a mark, and the solution is shaken to obtain the sample preparation solution.

18. The method according to claim 17, wherein the first nitric acid solution has is a volume fraction of 2% to 8%; the second nitric acid solution has a volume of 15 to 25 milliliters, and the second nitric acid solution has a volume fraction of 5% to 15%.

19. The method according to claim 1, wherein the sample preparation solution is measured using an inductively coupled plasma mass spectrometer.

20. The method according to claim 2, wherein the standard working solution of aluminum single-element series comprises the standard working solution of aluminum single-element series with a concentration of 0, 0.5, 1.0, 2.0, 5.0, 10.0, 20.0 and 50.0 micrograms per liter.

21. The method according to claim 2, wherein a concentration of the internal standard working solution is determined according to a concentration gradient of the standard working solution of aluminum single-element series and a content range of an actual test sample.

22. The method according to claim 21, wherein the concentration of the internal standard working solution is 10 micrograms per liter.

## Patentansprüche

1. Verfahren zum Nachweisen einer freigesetzten Aluminiummenge in einem Rauch einer Zigarette mit Erwärmung ohne Verbrennung (6), das die folgenden Schritte umfasst:
Herstellung einer Standard-Arbeitslösung von Aluminium;
Erhalten einer Standard-Arbeitskurve von Aluminium gemäß der Standard-Arbeitslösung von Aluminium;
Paffen einer Zigarette mit Erwärmung ohne Verbrennung und Sammeln der gesamten Rauchzusammensetzung der Zigarette mit Erwärmung ohne Verbrennung;
Gewinnung einer Probenaufbereitungslösung entsprechend der gesammelten gesamten Rauchzusammensetzungen;
Bestimmen der freigesetzten Aluminiummenge in den gesamten Rauchzusammensetzungen durch Kombinieren mit der Standard-Arbeitskurve von Aluminium, entsprechend einer Messung und Analyse der Probenaufbereitungslösung.

2. Verfahren nach Anspruch 1, wobei die Standard-Arbeitslösung von Aluminium durch allmähliches Verdünnen der Einzelelement-Standardlösung von Aluminium erhalten wird und die Standard-Arbeitslösung von Aluminium die Standard-Arbeitslösung der Einzelelementreihe von Aluminium umfasst.

3. Verfahren nach Anspruch 1 oder 2, wobei entsprechend der Standard-Arbeitslösung von Aluminium ein externes Standardverfahren oder ein internes Standardverfahren angewendet wird, um die Standardarbeitskurve von Aluminium zu erhalten.

4. Verfahren nach Anspruch 3, wobei die Standardarbeitskurve von Aluminium gemäß der Standard-Arbeitslösung von Aluminium durch Kombination mit einer internen Standard-Arbeitslösung erhalten wird.

5. Verfahren nach Anspruch 4, wobei die interne Standard-Arbeitslösung durch Verdünnen der ⁴⁵Sc-Element-Standardlösung erhalten wird.

6. Verfahren nach Anspruch 5, wobei sowohl die Einzelelement-Standardlösung von Aluminium als auch die ⁴⁵Sc-Element-Standardlösung ein Medium aus der ersten Salpetersäurelösung aufweisen.

7. Verfahren nach Anspruch 1, wobei die gesamten Rauchzusammensetzungen in einem Lösungsauffangverfahren gesammelt werden.

8. Verfahren nach Anspruch 7, wobei die gesamten Rauchzusammensetzungen durch Verwendung einer Vielzahl von in Reihe geschalteten Absorptionsflaschen gesammelt werden.

9. Verfahren nach Anspruch 8, wobei das Sammeln der gesamten Rauchzusammensetzungen die folgenden Schritte umfasst:
(1) Bestimmen einer Zigarettenrauchmaschine;
(2) Verbinden der Vielzahl der in Reihe geschalteten Absorptionsflaschen zwischen einem hinteren Ende einer Halterung der Zigarettenrauchmaschine und einem Paffmechanismus;
(3) Einführen eines Zigarettenendes der Zigarette mit Erwärmung ohne Verbrennung in eine Heizvorrichtung und Einführen eines Mundstückendes in die Halterung der Zigarettenrauchmaschine;
(4) Erhitzen durch Anwenden der Heizvorrichtung und Sammeln der gesamten Rauchzusammensetzungen in einer Zeitspanne von einem Zeitpunkt, zu dem die Zigarettenrauchmaschine zu paffen beginnt, bis zu einem Zeitpunkt, zu dem die Zigarettenrauchmaschine zu paffen aufhört.

10. Verfahren nach Anspruch 9, wobei eine Anzahl von Paff-Zügen entsprechend einem Paffmodus der Zigarettenrauchmaschine und einer von der Heizvorrichtung eingestellten Heizzeit bestimmt wird und die Zigarettenrauchmaschine nach Erreichen der Anzahl von Paff-Zügen das Paffen beendet.

11. Verfahren nach Anspruch 10, wobei der Paffmodus der Zigarettenrauchmaschine ein tiefer kanadischer Paffmodus oder ein Standard-Paffmodus ist.

12. Verfahren nach Anspruch 11, wobei die Zigarettenrauchmaschine, die den tiefen kanadischen Paffmodus annimmt, eine Paffkapazität von 55 ml, eine Paffzeit von 2 Sekunden und ein Intervall zwischen benachbarten Paff-Zügen von 28 Sekunden aufweist; wobei der tiefe kanadische Paffmodus 2 Paff-Züge pro Minute macht.

13. Verfahren nach Anspruch 11, wobei die Zigarettenrauchmaschine, die den Standard-Paffmodus annimmt, eine Paffkapazität von 35 ml pro Paff-Zug, eine Paffzeit von 2 Sekunden und ein Intervall zwischen benachbarten Paff-Zügen von 58 Sekunden aufweist; wobei der Standard-Paffmodus 1 Paff-Zug pro Minute macht.

14. Verfahren nach Anspruch 9, wobei die Zigarettenrauchmaschine eine lineare Rauchmaschine ist.

15. Verfahren nach Anspruch 9, wobei der Absorptionsflasche ein Oxidationsmittel zugesetzt wird, eine Absorptionsflüssigkeit in der Absorptionsflasche vollständig in einen Messkolben überführt wird und die Probenaufbereitungslösung nach der Herstellung eines konstanten Volumens erhalten wird.

16. Verfahren nach Anspruch 15, wobei die Absorptionsflasche eine Quarz-Absorptionsflasche ist und die Absorptionsflüssigkeit in der Quarz-Absorptionsflasche eine zweite Salpetersäurelösung ist.

17. Verfahren nach Anspruch 16, wobei das Oxidationsmittel der Quarz-Absorptionsflasche zugesetzt wird, um das Aluminium in den gesamten Rauchzusammensetzungen vollständig zu oxidieren; und nach dem Schütteln werden die Absorptionsflüssigkeit und das Detergens in der Quarz-Absorptionsflasche zusammen vollständig in den Messkolben überführt, und die erste Salpetersäurelösung wird verwendet, um das Volumen bis zu einer Markierung zu erhöhen, und die Lösung wird geschüttelt, um die Probenaufbereitungslösung zu erhalten.

18. Verfahren nach Anspruch 17, wobei die erste Salpetersäurelösung einen Volumenanteil von 2 % bis 8 % aufweist; die zweite Salpetersäurelösung ein Volumen von 15 bis 25 Millilitern hat und die zweite Salpetersäurelösung einen Volumenanteil von 5 % bis 15 % aufweist.

19. Verfahren nach Anspruch 1, wobei die Probenaufbereitungslösung unter Verwendung eines induktiv gekoppelten Plasmamassenspektrometers gemessen wird.

20. Verfahren nach Anspruch 2, wobei die Standard-Arbeitslösung der Einzelelementreihe von Aluminium die Standard-Arbeitslösung der Einzelelementreihe von Aluminium mit einer Konzentration von 0, 0,5, 1,0, 2,0, 5,0, 10,0, 20,0 und 50,0 Mikrogramm pro Liter umfasst.

21. Verfahren nach Anspruch 2, wobei eine Konzentration der internen Standard-Arbeitslösung entsprechend einem Konzentrationsgradienten der Standard-Arbeitslösung der Einzelelementreihe von Aluminium und einem Gehaltsbereich einer tatsächlichen Testprobe bestimmt wird.

22. Verfahren nach Anspruch 21, wobei die Konzentration der internen Standard-Arbeitslösung 10 Mikrogramm pro Liter beträgt.

## Revendications

1. Procédé pour la détection d'une quantité de dégagement d'aluminium dans une fumée d'une cigarette à chauffage sans combustion (6), comprenant les étapes suivantes :
la préparation d'une solution de travail étalon d'aluminium ;
l'obtention d'une courbe de travail étalon d'aluminium selon la solution de travail étalon d'aluminium ;
la prise d'une bouffée sur la cigarette à chauffage sans combustion, et la collecte de compositions de fumée totales de la cigarette à chauffage sans combustion ;
l'obtention d'une solution de préparation d'échantillon selon les compositions de fumée totales collectées ;
la détermination de la quantité de dégagement d'aluminium dans les compositions de fumée totales collectées par combinaison avec la courbe de travail étalon d'aluminium, selon une mesure et une analyse de la solution de préparation d'échantillon.

2. Procédé selon la revendication 1, dans lequel la solution de travail étalon d'aluminium est obtenue par la dilution graduelle de la solution étalon mono-élémentaire d'aluminium, et la solution de travail étalon d'aluminium comprend une solution de travail étalon de séries mono-élémentaires d'aluminium.

3. Procédé selon la revendication 1 ou 2, dans lequel, selon la solution de travail étalon d'aluminium, un procédé à étalon externe ou un procédé à étalon interne est adopté pour obtenir la courbe de travail étalon d'aluminium.

4. Procédé selon la revendication 3, dans lequel, selon la solution de travail étalon d'aluminium, la courbe de travail étalon d'aluminium est obtenue par combinaison avec une solution de travail à étalon interne.

5. Procédé selon la revendication 4, dans lequel la solution de travail à étalon interne est obtenue par dilution d'une solution étalon élémentaire de ⁴⁵Sc.

6. Procédé selon la revendication 5, dans lequel à la fois la solution étalon mono-élémentaire d'aluminium et la solution étalon élémentaire de ⁴⁵Sc possèdent un milieu de première solution d'acide nitrique.

7. Procédé selon la revendication 1, dans lequel les compositions de fumée totales sont collectées dans un procédé de capture en solution.

8. Procédé selon la revendication 7, dans lequel les compositions de fumée totales sont collectées par l'adoption d'une pluralité d'absorbeurs raccordés séquentiellement en série.

9. Procédé selon la revendication 8, dans lequel la collecte des compositions de fumée totales comprend les étapes suivantes :
(1) la détermination d'une machine à fumer des cigarettes ;
(2) le raccordement de la pluralité desdits absorbeurs raccordés en série entre une extrémité arrière d'un support de la machine à fumer des cigarettes et un mécanisme de prise de bouffée ;
(3) l'insertion d'une extrémité de cigarette de la cigarette à chauffage sans combustion dans un élément chauffant, et l'insertion d'une extrémité de pièce buccale dans le support de la machine à fumer des cigarettes ;
(4) le chauffage par l'adoption de l'élément chauffant, et la collecte des compositions de fumée totales pendant une durée d'un instant auquel la machine à fumer des cigarettes commence la prise de bouffées à un instant auquel la machine à fumer des cigarettes termine la prise de bouffées.

10. Procédé selon la revendication 9, dans lequel un nombre de bouffées est déterminé selon un mode de prise de bouffées de la machine à fumer des cigarettes et un temps de chauffage réglé par l'élément chauffant, et après avoir atteint le nombre de bouffées, la machine à fumer des cigarettes termine la prise de bouffées.

11. Procédé selon la revendication 10, dans lequel le mode de prise de bouffées de la machine à fumer des cigarettes est un mode de prise de bouffées profond canadien ou un mode de prise de bouffées classique.

12. Procédé selon la revendication 11, dans lequel la machine à fumer des cigarettes adoptant le mode de prise de bouffées profond canadien comprend une capacité de bouffée de 55 ml, une durée de bouffée de 2 secondes, et un intervalle entre bouffées adjacentes de 28 secondes ; le mode de prise de bouffées profond canadien prend 2 bouffées par minute.

13. Procédé selon la revendication 11, dans lequel la machine à fumer des cigarettes adoptant le mode de prise de bouffées classique comprend une capacité de bouffée de 35 ml par bouffée, une durée de bouffée de 2 secondes, et un intervalle entre bouffées adjacentes de 58 secondes ; le mode de prise de bouffées classique prend 1 bouffée par minute.

14. Procédé selon la revendication 9, dans lequel la machine à fumer des cigarettes est une machine à fumer linéaire.

15. Procédé selon la revendication 9, dans lequel l'ajout d'un oxydant à l'absorbeur, le transfert d'un liquide d'absorption dans l'absorbeur complètement vers une fiole jaugée, et l'obtention de la solution de préparation d'échantillon après qu'un volume constant est constitué.

16. Procédé selon la revendication 15, dans lequel l'absorbeur est un absorbeur en quartz, et le liquide d'absorption dans l'absorbeur en quartz est une seconde solution d'acide nitrique.

17. Procédé selon la revendication 16, dans lequel l'oxydant est ajouté à l'absorbeur en quartz pour oxyder complètement l'aluminium dans les compositions de fumée totales ; et après agitation, le liquide d'absorption et un détergent dans l'absorbeur en quartz sont complètement transférés dans la fiole jaugée ensemble, et la première solution d'acide nitrique est utilisée pour amener le volume jusqu'à un repère, et la solution est agitée pour obtenir la solution de préparation d'échantillon.

18. Procédé selon la revendication 17, dans lequel la première solution d'acide nitrique possède une fraction volumique de 2 % à 8 % ; la seconde solution d'acide nitrique possède un volume de 15 à 25 millilitres, et la seconde solution d'acide nitrique possède une fraction volumique de 5 % à 15 %.

19. Procédé selon la revendication 1, dans lequel la solution de préparation d'échantillon est mesurée à l'aide d'un spectromètre de masse à plasma à couplage inductif.

20. Procédé selon la revendication 2, dans lequel la solution de travail étalon de séries mono-élémentaires d'aluminium comprend la solution de travail étalon de séries mono-élémentaires d'aluminium avec une concentration de 0, 0,5, 1,0, 2,0, 5,0, 10,0, 20,0 et 50,0 microgrammes par litre.

21. Procédé selon la revendication 2, dans lequel une concentration de la solution de travail à étalon interne est déterminée selon un gradient de concentration de la solution de travail étalon de séries mono-élémentaires d'aluminium et une plage de teneur d'un échantillon de test réel.

22. Procédé selon la revendication 21, dans lequel la concentration de la solution de travail à étalon interne est de 10 microgrammes par litre.
